# EUROPEAN PATENT SPECIFICATION

(11) **EP 1 948 564 B1**
(45) Date of publication and mention of the grant of the patent: **10.05.2017**
(21) Application number: 06807217.2
(22) Date of filing: 12.10.2006
(51) Int. Cl.: C01B 33/18, B01F 7/18

(54) **DRY LIQUIDS AND PROCESSES FOR THEIR PREPARATION**
TROCKENE FLÜSSIGKEITEN UND VERFAHREN ZU IHRER HERSTELLUNG
LIQUIDES SECS ET PROCÉDÉS POUR LEUR PRÉPARATION

(30) Priority: 16.11.2005 EP 05025001
(43) Date of publication of application: 30.07.2008
(73) Proprietor: Evonik Degussa GmbH, 45128 Essen (DE)
(72) Inventor: PITSCH, Holger, 63533 Mainhausen (DE); PIROTH, Josef, 63875 Mespelbrunn (DE); RIEDEMANN, Thomas, 63776 Mömbris (DE); RIEDEMANN, Heike, 63776 Mömbris (DE); GRAY, Ann, 63452 Hanau (DE); HUENIG, Frank Dieter, 63791 Karlstein (DE)
(86) International application number: PCT/EP2006/067352
(87) International publication number: WO 2007/057262

(56) References cited:
- EP-A- 0 478 326
- EP-A- 1 386 599
- CA-A1- 1 197 273
- DE-U1- 9 420 292
- US-A- 3 393 155

## Description

The invention relates to dry liquids and a process for their preparation.

Dry liquids, in particular dry water, are disclosed in US 3,393,155.

They consist of pyrogenically prepared silica which has a mean particle size of not more than 50 millimicron, the surface of which may have been rendered hydrophobic and which contains 5 to 10 times the amount of liquid in encapsulated form.

The powder (dry water) has a pulverulent appearance in spite of the large proportion of water.

The known dry powder can be prepared by separating the liquid into fine droplets and mixing these fine droplets with water-repellent, pyrogenically prepared silica with high energy input so that the droplets of the liquid are completely surrounded by the water-repellent silica (US 3,393,155).

It is furthermore known that a drilling fluid component can be prepared by mixing and combining water with a hydrophobic, pyrogenically prepared silica under high shear conditions, a flowable, dry, pulverulent solid product being obtained.

The mixing can be effected under high shear conditions. Thus, a high-speed pump or a disperser can be used in the laboratory.

On a larger scale, a rotating stirrer provided with blades, a mixing pump or any other mixer which is suitable for introducing high shear energy into the mixture can be used (US 3,951,824).

It is furthermore known that dry water can be prepared by stirring silica with water and can be used as a fire extinguishing agent. It can be stored at low temperatures because it does not lose its flowability as a powder even at extremely low temperatures (US 5,342,597 and US 4,008,170).

It is furthermore known that dry water can be prepared by using a "rocking mixer" or a shaking apparatus as apparatuses for the high-speed movement of the mixture (US 2004/0028710 A1).

In EP 0478326 A1, a method of encapsulating a hydrophobic liquid and the resulting micro-encapsulate in the form of a dried particulate comprising an outer silica layer and a hydrophobic liquid is disclosed.

The known processes have the disadvantage that only relatively small amounts of dry water can be prepared.

Furthermore, the known dry liquids have only a limited storage stability.

It was therefore the object to develop a dry liquid which does not have this disadvantage. Moreover, it was intended to develop a process by means of which larger amounts of dry water can be prepared.

The invention relates to dry liquids containing a hydrophobic, pyrogenically prepared silica, which is characterized in that the individual drop size is less than 5 µm.

Preferably, the individual drop size may be in the range of from 1 to 4.5 µm.

The invention furthermore relates to dry liquids containing a hydrophobic, pyrogenic silica, which are characterized by the following physicochemical parameters:
Particle size distribution (agglomerate size distribution)
(cumulative undersize)

| | | | |
|---|---|---|---|
| D10% | 80 to 140 µm | | |
| D50% | 140 to 200 µm | | |
| D90% | 190 to 340 µm | | |
| Bulk density DIN 53912 | | kg/m³ | 400 to 500 |
| Tamped density DIN ISO 787 | | kg/m³ | 500 to 600 |
| Solids content DIN 53 198 | | % | 4 to 10 |

The invention furthermore relates to a process for the preparation of dry liquids, which is characterized in that the liquids and the hydrophobic, pyrogenically prepared silica are introduced into a vessel and mixed there by means of a high-intensity stirrer, a wall-channelling stirrer moving simultaneously and the high-intensity stirrer moving in its axial direction.

According to the invention, liquid drops are produced by means of the high-intensity stirrer, optionally by means of shearing.

These liquid drops are brought into contact with the hydrophobic, pyrogenically prepared silica. The stirrer may be a wall-channelling slowly rotating stirrer by means of which the material is transported from the dead zones in which no mixing by means of the high-intensity stirrer takes place to the shear region of the high-intensity stirrer.

By means of the axial movement, such as, for example, upward and downward movement, it is possible to ensure that thorough mixing takes place in the axial direction.

The vessel may have a cylindrical geometry, a spherical geometry, a cylindrical geometry equipped with a cone or cylindrical geometry equipped with a spherical shape.

Toothed-disc stirrers can be used as high-intensity stirrers.

Liquids may be understood as meaning water, aqueous salt solutions, aqueous solutions of glycerol and similar water-miscible liquid components in pharmaceuticals, cosmetics, etc.

The invention has the advantage that a dry liquid which has good storage stability was developed.

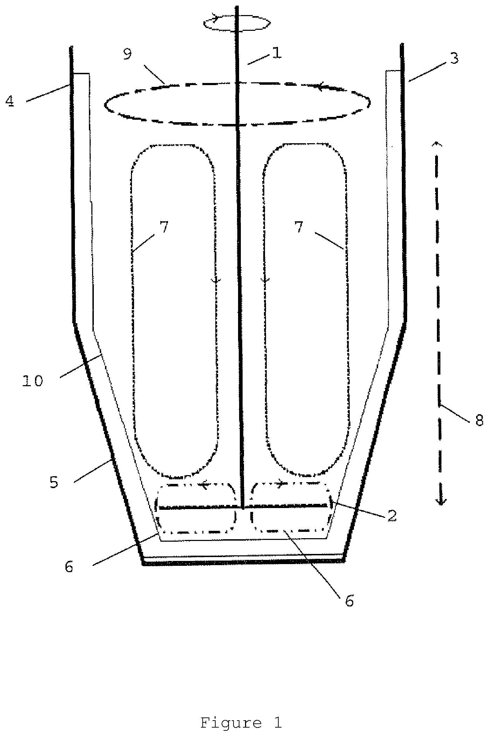

The process according to the invention is explained in more detail and described with reference to the drawing:
According to Figure 1, the toothed-disc stirrer 1 is operated as a high-intensity stirrer at a circumferential velocity of 12 to 45 m/s. The toothed-disc stirrer 1 has the toothed disc 2 and is rotated clockwise. The container 3 has a cylindrical part 4 and a conical part 5. The ratio of the diameter cylinder 4 to that of cone 5 is from 1 to 0.3. The ratio of cone 5 to high-intensity stirrer is from 0.9 to 0.3. The ratio of height to diameter of the cylinder 4 is from 1 to 2. The ratio of height to diameter of cone 5 is from 1 to 3.

Rotation of the high-intensity stirrer 1 results in the following movements and product streams:

| | |
|---|---|
| 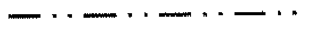 | Radial product flow (6) |
| 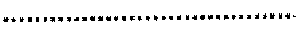 | Axial product flow (7) |
| 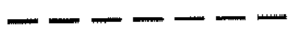 | Movement of high-intensity mixing unit (8) |
| 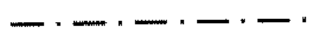 | Movement of clearing arm (9) |

The product streams 6 and 7 arise from the rotation of the high-intensity stirrer 1, which can be moved axially in the sense of the movement 8, i.e. vertically.

When the high-intensity stirrer 1 is operated alone in only one vertical plane, localized accumulations of water form on the container wall because the drop formation changes with increasing powder formation. Dead zones form owing to the changed flow behaviour.

The movement 9 of the clearing arm of the wall-channelling anchor stirrer 10 prevents the formation of localized accumulations of water and dead zones. Uniform thorough mixing takes place. The movement of the clearing arm of the anchor stirrer 10 may be 0.2 to 2 m/s.

### Example:

Dry liquids are prepared using the apparatus as shown in Figure 1:
The individual conditions are shown in Table 1:

**Table 1**

| **Experiment number** | **Composition** | | | **Preparation method** | **Total mixing time** | **Circumferential velocity** | **Dry residue** |
|---|---|---|---|---|---|---|---|
| | AEROSIL | Demineralized water | Additive | | | | |
| | | | | | **(min)** | **(m/s)** | **(%)** |
| 01 | 5% | 95% | | High-intensity stirrer | 7 | 23.8 | 4.49 |
| 02 | 5% | 95% | | High-intensity stirrer | 10 | 28.1 | 5.04 |
| 03 | 5% | 95% | | High-intensity stirrer | 5 | 36.6 | 4.87 |
| 04 | 5% | 95% | | High-intensity stirrer | 15 | 32.1 | 5.21 |
| 05 | 5% | 94.90% | 0.10% | High-intensity stirrer | 15 | 32.1 | 4.94 |
| 06 | 5% | 95% | | High-intensity stirrer | 30 | 32.1 | 4.99 |
| 06 | 5% | 95% | | High-intensity stirrer | 30 | 39.3 | 4.99 |
| 07 | 5% | 95% | | High-intensity stirrer | 9 | 38.5 | 5.00 |

**Table 2:**

| | | Example: High-intensity stirrer | |
|---|---|---|---|
| Particle size distribution (cumulative undersize) | D10% | 103 | 114 |
| | D50% | 158 | 184 |
| | D90% | 236 | 315 |
| Bulk density DIN 53912 [kg/m³] | | 471 | 493 |
| Tamped density DIN/ISO 787 [kg/m³] | | 558 | 567 |
| Solids content DIN 53198 [%] | | 4.9 | 4.9 |
| Circumferential velocity [m/s] | | 32 | 38.5 |
| Liquid component | | Water | Water |

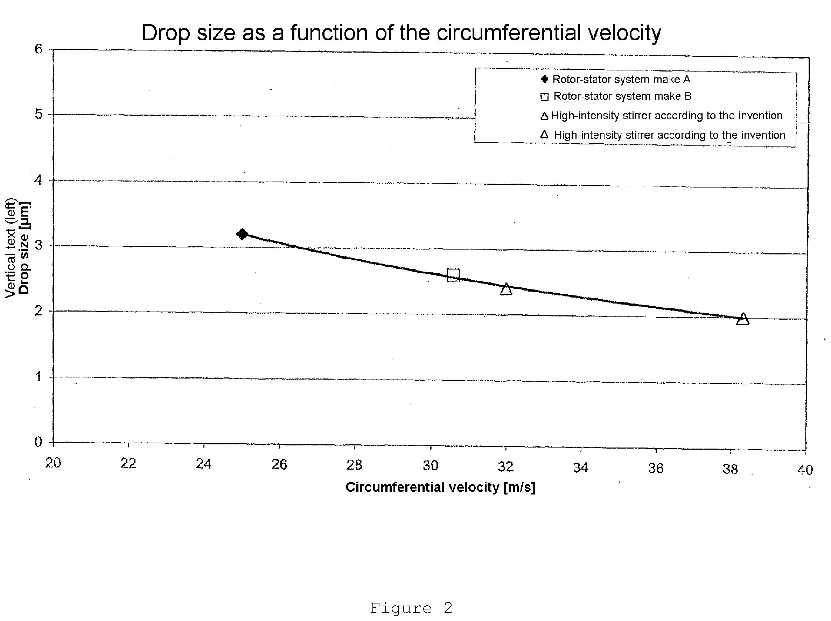

The dependence of the size of the individual drops on the circumferential velocity is shown graphically in Figure 2.

The particle sizes of the individual drops are determined by means of TEM analysis (bred analysis) on the freeze-dried (cryoprepared) dry liquid.

The cryopreparation is effected as follows.

In the cryopreparation, the cryopreparation chamber is first cooled with liquid nitrogen to about 100 K. When the preparation chamber is opened, a heat vaporizes N₂ so that the preparation takes place in a dry N₂ atmosphere. The preparation holder is likewise cooled to about 100 K by introducing liquid N₂ into the Dewar of the holder.

For preparation 1, "dry water" was dusted onto a preparation support net coated with a thin polymer layer and was placed on a piece of filter paper in the preparation chamber cooled to low temperature and was frozen.

For preparation 2, ethane was liquefied in a copper container. A small net dusted with "dry water" was dipped into the ethane. According to the higher heat capacity of the liquefied ethane, the water is frozen abruptly here, as a rule in amorphous form, in contrast to preparation 1. The sample can no longer change on cooling, in contrast to preparation 1.

The frozen preparations were then transferred to the preparation holder and transferred to the transmission electron microscope. Because the holder is cooled to a low temperature, the preparations can be analysed in the frozen state in the TEM.

The agglomerate size distribution is determined by means of Camsizer from RETSCH GmbH & Co. KG, D-42781 Haan.

## Claims

1. Dry liquids in the form of a dry powder having a pulverulent appearance, containing hydrophobic, pyrogenically prepared silica, **characterized by** the following physiochemical parameters:
particle size distribution (agglomerate size distribution) (cumulative undersize)
| | | | |
|---|---|---|---|
| D10% | 80 to 140 µm | | |
| D50% | 140 to 200 µm | | |
| D90% | 190 to 340 µm | | |
| Bulk density DIN 53912 | | kg/m³ | 400 to 500 |
| Tamped density DIN ISO 787 | | kg/m³ | 500 to 600 |
| Solids content DIN 53 198 | | % | 4 to 10 |
and in that the individual drop size is less than 5 µm.

2. Process for the preparation of dry liquids as defined in Claim 1, **characterized in that** the liquid and the hydrophobic, pyrogenically prepared silica are introduced into a vessel and mixed there by means of a high-intensity stirrer, a wall-channelling stirrer simultaneously being moved and the high-intensity stirrer being moved in its axial direction.

## Patentansprüche

1. Trockene Flüssigkeiten in Form eines trockenen Pulvers mit einer pulverförmigen Erscheinungsform, enthaltend eine hydrophobe, pyrogen hergestellte Kieselsäure, **gekennzeichnet, durch** die folgenden physikalisch-chemischen Parameter:
Teilchengrößenverteilung (Agglomeratgrößenverteilung) (Durchgangssumme)
| | | | |
|---|---|---|---|
| D10% | 80 bis 140 µm | | |
| D50% | 140 bis 200 µm | | |
| D90% | 190 bis 340 µm | | |
| Schüttgewicht DIN 53912 | | kg/m³ | 400 bis 500 |
| Stampfdichte DIN ISO 787 | | kg/m³ | 500 bis 600 |
| Feststoffanteil DIN 53 198 | | % | 4 bis 10 |
und **dadurch**, dass die Einzeltropfengröße unterhalb von 5 µm liegt.

2. Verfahren zur Herstellung von trockenen Flüssigkeiten gemäß Anspruch 1, **dadurch gekennzeichnet, dass** man die Flüssigkeit und die hydrophobe, pyrogen hergestellte Kieselsäure in einem Gefäß einträgt und dort mittels eines Intensivrührers vermischt, wobei man gleichzeitig einen randgängigen Rührer bewegt und den Intensivrührer in seiner axialen Richtung bewegt.

## Revendications

1. Liquides secs sous la forme d'une poudre sèche ayant une apparence pulvérulente, contenant de la silice hydrophobe, préparée par voie pyrogénique, **caractérisés par** les paramètres physico-chimiques suivants :
Distribution de taille de particules (distribution de taille d'agrégats) (tamisat cumulé)
| | | | |
|---|---|---|---|
| D10% | 80 à 140 | µm | |
| D50% | 140 à 200 | µm | |
| D90% | 190 à 340 | µm | |
| Densité apparente DIN 53912 | | kg/m³ | 400 à 500 |
| Densité tassée DIN ISO 787 | | kg/m³ | 500 à 600 |
| Teneur en solides DIN 53198 | | % | 4 à 10 |
et en ce que la taille des gouttes individuelles est inférieure à 5 µm.

2. Procédé de préparation de liquides secs tels que définis dans la revendication 1, **caractérisé en ce que** le liquide et la silice hydrophobe, préparée par voie pyrogénique sont introduits dans une cuve et y sont mélangés au moyen d'un agitateur à forte intensité, un agitateur à canalisation près des parois étant simultanément déplacé et l'agitateur à forte densité étant déplacé dans sa direction axiale.
